(19) **Europäisches Patentamt / European Patent Office / Office européen des brevets**

(11) **EP 2 980 896 A1**

(12) **EUROPEAN PATENT APPLICATION**
published in accordance with Art. 153(4) EPC

(43) Date of publication:
03.02.2016 Bulletin 2016/05

(21) Application number: 14772631.9

(22) Date of filing: 24.03.2014

(51) Int Cl.:
*H01M 4/60* $^{(2006.01)}$    *H01G 11/22* $^{(2013.01)}$
*H01M 4/137* $^{(2010.01)}$    *H01M 4/62* $^{(2006.01)}$

(86) International application number:
**PCT/JP2014/058024**

(87) International publication number:
**WO 2014/157059 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2013  JP 2013064456**

(71) Applicant: **Nitto Denko Corporation**
**Ibaraki-shi, Osaka 567-8680 (JP)**

(72) Inventors:
• **KISHII, Yutaka**
**Ibaraki-shi**
**Osaka 567-8680 (JP)**

• **ABE, Masao**
**Ibaraki-shi**
**Osaka 567-8680 (JP)**
• **UETANI, Yoshihiro**
**Ibaraki-shi**
**Osaka 567-8680 (JP)**

(74) Representative: **Hoffmann Eitle**
**Patent- und Rechtsanwälte PartmbB**
**Arabellastraße 30**
**81925 München (DE)**

(54) **ELECTRODE FOR POWER STORAGE DEVICE AND POWER STORAGE DEVICE USING SAME**

(57)     A power storage device electrode is provided, which includes a layer (7) made of a composite material containing an organic sulfide compound (A) as an electrode active material and a sulfide-containing organic polymer (B) as a binder, and a current collector (6) stacked on the layer. The power storage device electrode is used as a positive electrode of a power storage device. Therefore, the power storage device is less liable to suffer from reduction in capacity during repeated charge/discharge, and has a higher capacity density and a higher energy density.

FIG. 1

6   7

**Description**

TECHNICAL FIELD

The present invention relates to a power storage device electrode, and a power storage device employing the power storage device electrode.

BACKGROUND ART

With recent improvement and advancement of electronics technology for mobile PCs, mobile phones, personal digital assistants (PDAs) and the like, secondary batteries and the like, which can be repeatedly charge/discharged, are widely used as power storage devices for these electronic apparatuses. For these secondary batteries and other electrochemical power storage devices, electrode materials desirably have a higher capacity and a high-rate charge/discharge property.

An electrode for such a power storage device contains an active material that is capable of ion insertion/extraction. The ion insertion/extraction of the active material is also referred to as doping/dedoping, and a doping/dedoping amount per unit molecular structure is referred to as dope ratio (or doping ratio). A material having a higher dope ratio can provide a higher capacity battery.

From an electrochemical viewpoint, the capacity of the battery can be increased by using an electrode material having a greater ion insertion/extraction amount. In lithium secondary batteries which are attractive power storage devices, more specifically, a graphite-containing negative electrode capable of lithium ion insertion/extraction is used in which about one lithium ion is inserted and extracted with respect to six carbon atoms to provide a higher capacity.

Of these lithium secondary batteries, a lithium secondary battery, which has a higher energy density, is widely used as the power storage device for the aforesaid electronic apparatuses and includes a positive electrode prepared by using a lithium-containing transition metal oxide such as lithium manganese oxide or lithium cobalt oxide as an electrode active material, and a negative electrode prepared by using a carbon material capable of lithium ion insertion/extraction, the positive electrode and the negative electrode being disposed in opposed relation in an electrolyte solution.

With a recent demand for further increase in capacity, it has been contemplated to further increase the capacity density per unit weight of the electrode active material. For example, it is reported that, where a manganese/silicon-based positive electrode containing a lithium-containing transition metal oxide as an electrode active material is used as a positive electrode of a power storage device, the power storage device has a capacity density of 220 mAh/g (see NPL1).

It is also reported that, where an organic disulfide-, quinone-, diazine- or radialene-containing lower-molecular weight compound is used as an electrode active material for a positive electrode of a power storage device, the power storage device has a capacity density of 500 mAh/g (see NPL2).

However, the power storage device employing the organic lower-molecular weight compound as the electrode active material has a significantly lower discharge voltage, and hence, is less advantageous in energy density than a power storage device employing the lithium-containing transition metal oxide as the electrode active material. Therefore, an electrode is proposed that employs a composite material containing the organic lower-molecular weight compound and an organic electrically-conductive polymer expected to provide a higher voltage (see PTL1 and PTL2).

RELATED ART DOCUMENT

PATENT DOCUMENTS

PTL1: JP-A-HEI9(1997)-259864
PTL2: JP-A-HEI6(1994)-20692

NON-PATENT DOCUMENTS

NPL1: GS Yuasa Technical Report, Dec. 2010, Vol. 7, No. 2, p12 - p18
NPL2: Nikkei Electronics, 13, Dec. 2010, p73 to p82

## SUMMARY OF INVENTION

Where the electrodes disclosed in the aforementioned patent documents are used, however, the capacities of the power storage devices are liable to be gradually reduced during repeated charge/discharge. This is supposedly because the organic lower-molecular weight compound used as the electrode active material is highly soluble in the electrolyte solution and, during the repeated charge/discharge, the electrode active material dissolved in the electrolyte solution gradually becomes unable to contribute to an electrode reaction.

In view of the foregoing, it is an object of the present invention to provide a novel power storage device electrode, which is less liable to suffer from reduction in capacity during repeated charge/discharge and has a higher capacity density and a higher energy density, and to provide a power storage device employing the power storage device electrode.

According to a first aspect of the present invention, there is provided a power storage device electrode, which includes a layer made of a composite material, and a current collector stacked on the layer, the composite material including: (A) an organic sulfide compound as an electrode active material; and (B) a sulfide-containing organic polymer as a binder.

According to a second aspect of the present invention, there is provided a power storage device which includes an electrolyte layer, and a positive electrode and a negative electrode provided on opposite sides of the electrolyte layer, wherein the positive electrode is the power storage device electrode of the first aspect, wherein the negative electrode includes at least one selected from a compound and a metal which are capable of ion insertion/extraction.

The inventors of the present invention conducted intensive studies to solve the aforementioned problems. In the studies, the inventors found that, where the power storage device electrode is produced by employing the composite material which contains the organic sulfide compound as the electrode active material and the sulfide-containing organic polymer as the binder, the power storage device electrode ensures a higher capacity density and a higher energy density, and is less liable to suffer from the dissolution of the electrode active material in the electrolyte solution during the repeated charge/discharge, thereby suppressing the reduction in capacity during the repeated charge/discharge.

As described above, the inventive power storage device electrode includes the layer made of the composite material including the organic sulfide compound (A) as the electrode active material and the sulfide-containing organic polymer (B) as the binder, and the current collector stacked on the layer. Therefore, a higher performance power storage device can be provided, which has a higher capacity density and a higher energy density and is less liable to suffer from the reduction in capacity during the repeated charge/discharge. Further, the inventive power storage device electrode is less liable to suffer from the dissolution of the electrode active material in the electrolyte solution during the repeated charge/discharge and, therefore, is applicable not only to a power storage device of a solid electrolyte type, but also to a power storage device of a conventional electrolyte solution type.

In the power storage device which includes the electrolyte layer, and the positive electrode and the negative electrode provided on the opposite sides of the electrolyte layer, the power storage device electrode of the first aspect is used as the positive electrode, and the negative electrode includes at least one selected from the compound and the metal which are capable of ion insertion/extraction. In this case, the power storage device has a higher energy density.

## BRIEF DESCRIPTION OF DRAWINGS

FIG. 1 is a sectional view showing the construction of a power storage device electrode.
FIG. 2 is a sectional view showing the construction of a power storage device.

## DESCRIPTION OF EMBODIMENTS

Embodiments of the present invention will hereinafter be described in detail by way of example but not by way of limitation.

<Electrode>

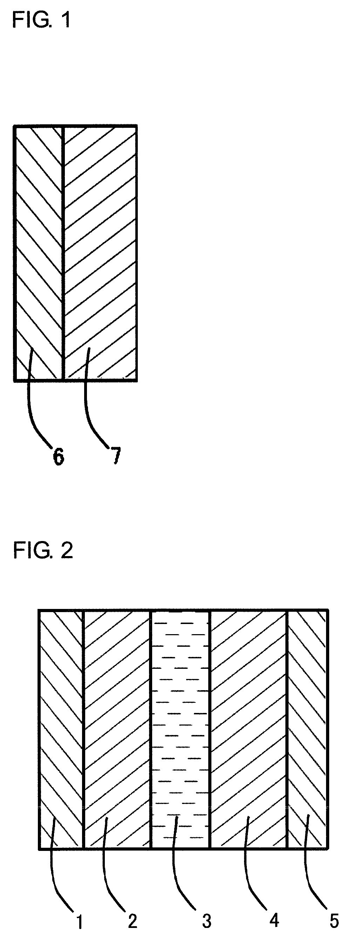

As shown in FIG. 1, the inventive power storage device electrode includes a composite material layer 7 and a current collector 6 stacked one on the other. The composite material layer 7 is made of a composite material which contains the organic sulfide compound (A) as the electrode active material and the sulfide-containing organic polymer (B) as the binder. Usable examples of the current collector 6 include carbon paper, nonwoven carbon fabric, carbon cloth, and metal foils and meshes such as of nickel, aluminum, stainless steel and copper. In the embodiment, the electrode active material is a material which has electrical conductivity variable due to ion insertion and extraction. In FIG. 1, the construction of the power storage device electrode is schematically shown, and the thicknesses of the respective layers differ from actual thicknesses.

The organic sulfide compound (A) to be used for the material for the inventive power storage device electrode (the material for the composite material layer 7) functions as the electrode active material. The organic sulfide compound (A) preferably has a molecular weight of not greater than 1000, and preferably contains two or more thiol groups or thiolate groups. Specific examples of the organic sulfide compound (A) include 2,5-dimercapto-1,3,4-thiadiazole, lithium sulfide, sulfur and 2,4,6-trimereapto-S-triazine, which may be used either alone or in combination.

The organic sulfide compound (A) is typically used in a proportion of 50 to 98 wt%, preferably 70 to 98 wt%, more preferably 90 to 98 wt%, based on the weight of the overall composite material. If the proportion of the organic sulfide compound (A) is excessively small, it will be impossible to provide a power storage device having a higher energy density. If the proportion of the organic sulfide compound (A) is excessively great, it will be impossible to provide a power storage device having an excellent cycle characteristic.

The sulfide-containing organic polymer (B) to be used in combination with the organic sulfide compound (A) functions as the binder. Examples of the sulfide-containing organic polymer (B) include polymers obtained through polymerization in the presence of a thiol chain transfer agent, and polymers obtained through polymerization in the presence of a thiocarbonylthio chain transfer agent. Examples of the thiol chain transfer agent include 1-dodecanethiol and 1-laurylmercaptothiol. Examples of the thiocarbonylthio chain transfer agent include trithiocarbonates, dithiocarbamates and dithiobenzoates. For the polymerization, acrylonitrile, a (meth)acrylic acid derivative having an oxyethylene group or an oxypropylene group at its side chain, or the like may be further used.

Specific examples of the sulfide-containing organic polymer (B) include sulfide-containing polyacrylonitrile-methyl acrylate copolymers, and sulfide-containing polyacrylonitrile-(meth)acrylic acid oligoalkylene oxide copolymers such as sulfide-containing polyacrylonitrile-(meth)acrylic acid oligoethylene oxide copolymers and sulfide-containing polyacrylonitrile-(meth)acrylic acid oligopropylene oxide copolymers, which may be used either alone or in combination.

The sulfide-containing organic polymer (B) is typically used in a proportion of 2 to 50 wt%, preferably 2 to 30 wt%, more preferably 2 to 10 wt%, based on the weight of the overall composite material. If the proportion of the sulfide-containing organic polymer (B) is excessively small, it will be impossible to provide a power storage device having an excellent cycle characteristic. If the proportion of the sulfide-containing organic polymer (B) is excessively great, it will be impossible to provide a power storage device having a higher weight energy density.

The inventive power storage device electrode may further contain an additional binder, and examples of the additional binder include: polymer materials including chain polymers such as polyethylene glycols and polypropylene glycols and comb-like branched polymers such as polyphosphazenes; and polyvinylidene fluorides, vinylidene fluoride-hexafluoropropylene copolymers, polyacrylonitriles and polymethyl (meth)acrylates. Other examples include poly(meth)acrylates having an oxyethylene group or an oxypropylene group at side chains thereof. These may be used either alone or in combination.

The material for the inventive power storage device electrode may further contain an electrically conductive agent, which may be an electrically conductive material free from change in its properties due to a potential applied during the discharge of the power storage device. Examples of the electrically conductive agent include carbon materials and metal materials, among which electrically conductive carbon blacks such as acetylene black and Ketjen black, and fibrous carbon materials such as carbon fibers and carbon nanotubes are preferred. The electrically conductive carbon blacks are particularly preferred.

The proportion of the electrically conductive agent in the material for the inventive power storage device electrode (the material for the composite material layer 7) is preferably 1 to 30 parts by weight, more preferably 1 to 20 parts by weight, further more preferably 1 to 10 parts by weight, based on 100 parts by weight of the overall electrode active material. Where the proportion of the electrically conductive agent falls within this range, it is possible to effectively improve the weight energy density without impairing the characteristic properties of the inventive power storage device electrode.

Where an electrolyte salt is blended in the material for the inventive power storage device electrode (the material for the composite material layer 7), the electrolyte salt and a solvent in which the electrolyte salt is dissolved may be the same as those to be described later for the electrolyte solution.

The inventive power storage device electrode shown in FIG. 1 is produced, for example, in the following manner. That is, the binder essentially including the sulfide-containing organic polymer (B) is dissolved in a solvent, such as water or an organic solvent, or in an electrolyte solution, and the electrode active material essentially including the organic sulfide compound (A) and, as required, the electrically conductive agent, such as the electrically conductive carbon black, are added to and sufficiently dispersed in the resulting solution, whereby a paste is prepared. The paste is applied onto the current collector 6, and the solvent is evaporated. Thus, the power storage device electrode is produced in a sheet form including the composite material layer 7 stacked on the current collector 6.

The reason why the power storage device employing this electrode has a higher energy density is not clarified yet, but this is supposedly because ions and electrons required for a battery charge/discharge reaction can be smoothly taken in and out.

The composite material layer 7 of the inventive power storage device electrode preferably has a thickness of 1 to 1000 $\mu$m, more preferably 10 to 700 $\mu$m. The thickness of the electrode is measured, for example, by means of a dial gage (available from Ozaki Mfg. Co. , Ltd.) which is a flat plate including a distal portion having a diameter of 5 mm. The measurement is performed at ten points on a surface of the electrode, and the measurement values are averaged. Then, the thickness of the composite material layer 7 is determined by subtracting the thickness of the current collector 6 from the average thickness of the electrode.

The composite material layer 7 preferably has a porosity of 20 to 80 %, more preferably 40 to 60 %. The porosity is determined from the following expression (1). In the expression (1), "Apparent volume of composite material layer" is defined as the product obtained by multiplying the area of an electrode surface of the electrode by the thickness of the composite material layer obtained by subtracting the thickness of the current collector from the thickness of the electrode. On the other hand, "Actual volume of composite material layer" is defined as the volume of the electrode material excluding the current collector. Specifically, the average density of all the materials for the composite material layer is calculated based on the weight proportions of the respective materials for the composite material layer and the actual densities of the respective materials, and the actual volume of the composite material layer is determined by dividing the total weight of the materials for the composite material layer by the average density.

$$\texttt{Porosity (\%) of composite material layer =}$$
$$\texttt{\{(Apparent volume of composite material layer - Actual}$$
$$\texttt{volume of composite material layer)/Apparent volume of}$$
$$\texttt{composite material layer\} × 100 ...(1)}$$

Pores formed in the composite material layer 7 preferably have an average pore diameter of 0.1 to 10 $\mu$m, more preferably 0.5 to 5 $\mu$m. The diameters of the pores are measured, for example, by a Micromeritics porosimeter AUTOPORE 9520 available from Shimadzu Corporation.

<Power Storage Device>

FIG. 2 illustrates an example of the inventive power storage device, which includes an electrolyte layer 3, and a positive electrode 2 and a negative electrode 4 disposed in opposed relation with the electrolyte layer 3 interposed therebetween. In FIG. 2, reference numerals 1 and 5 designate a positive electrode current collector and a negative electrode current collector, respectively. In FIG. 2, the construction of the power storage device is schematically shown, and the thicknesses of the respective layers differ from the actual thicknesses of the layers.

The inventive power storage device electrode shown in FIG. 1 may be used as the positive electrode (a stacked component of the positive electrode 2 and the positive electrode current collector 1) or as the negative electrode (a stacked component of the negative electrode 4 and the negative electrode current collector 5). Particularly, where the inventive power storage device electrode shown in FIG. 1 is used as the positive electrode and an electrode containing at least one selected from compounds and metals capable of ion insertion/extraction is used as the negative electrode, the resulting power storage device has a higher energy density.

Carbon paper, nonwoven carbon fabric, carbon cloth, or a metal foil or a mesh such as of nickel, aluminum, stainless steel or copper may be used as the positive electrode current collector 1 and the negative electrode current collector 5 shown in FIG. 2.

The electrolyte layer 3 of the inventive power storage device is formed from an electrolyte. For example, a sheet including a separator impregnated with an electrolyte solution or a sheet made of a solid electrolyte is preferably used. The sheet made of the solid electrolyte per se doubles as a separator. The inventive power storage device electrode is less liable to suffer from the dissolution of the electrode active material in the electrolyte solution due to repeated charge/discharge. Therefore, the electrolyte layer 3 is not limited to the solid electrolyte sheet and the electrolyte solution impregnated sheet, but the electrolyte solution may be used as it is for the electrolyte layer 3.

Where the electrolyte solution is used as it is or where the separator and the electrodes are impregnated with the electrolyte solution, preferred examples of the electrolyte for the electrolyte solution include compounds including a metal ion such as a lithium ion in combination with a proper counter ion such as a sulfonate ion, a perchlorate ion, a tetrafluoroborate ion, a hexafluorophosphate ion, a hexafluoroarsenic ion, a bis(trifluoromethanesulfonyl)imide ion, a bis(pentafluoroethanesulfonyl)imide ion or a halide ion. Specific examples of the electrolyte include $LiCF_3SO_3$, $LiClO_4$, $LiBF_4$, $LiPF_6$, $LiAsF_6$, $LiN(SO_2CF_3)_2$. $LiN(SO_2C_2F_5)_2$ and LiCl.

Examples of the solvent for the electrolyte solution include nonaqueous solvents, i.e., organic solvents, such as carbonates, nitriles, amides and ethers at least one of which is used. Specific examples of the organic solvents include ethylene carbonate, propylene carbonate, butylene carbonate, dimethyl carbonate, diethyl carbonate, ethyl methyl carbonate, acetonitrile, propionitrile, N,N'-dimethylacetamide, N-methyl-2-pyrrolidone, dimethoxyethane, diethoxyethane and γ-butyrolactone.

Where the electrolyte solution impregnated separator is used as the electrolyte layer 3, as described above, any of the aforementioned electrolytes for the electrolyte solution may be used.

Examples of the solvent for the electrolyte solution include water, and organic solvents such as carbonates, alcohols, nitriles, amides and ethers at least one of which is used.

Where the separator is used for the inventive power storage device, as described above, the separator may be an insulative porous sheet, which is capable of preventing electrical short circuit between the positive electrode and the negative electrode disposed in opposed relation with the intervention of the separator and has electrochemical stability, higher ion permeability and a certain mechanical strength. Therefore, exemplary materials for the separator include paper, nonwoven fabrics and porous resin sheets such as of polypropylenes, polyethylenes and polyimides, which may be used either alone or in combination.

Where the electrode containing at least one selected from the compounds and the metals capable of ion insertion/extraction is used as the negative electrode, as described above, preferred examples of the compounds and the metals include metal lithium, carbon materials and transition metal oxides capable of insertion and extraction of lithium ions in oxidation and reduction, silicon and tin. In the present invention, the term "use" means that the specific material is used alone, as well as that the specific material is used in combination with other material. The proportion of the other material is less than 50 wt% based on the total weight of the materials.

The inventive power storage device may be provided in a variety of forms including a laminate cell form, a porous sheet form, a sheet form, a square form, a cylindrical form and a button form.

The power storage device is preferably assembled in a glove box in an inert gas atmosphere such as an ultrapure argon gas atmosphere.

EXAMPLES

Inventive examples will hereinafter be described in conjunction with a comparative example. However, the prevent invention is not limited to these examples.

Polymers were prepared by the following exemplary production processes 1 and 2 before the production of power storage devices according to the inventive examples and the comparative example.

[Exemplary Production Process 1: Synthesis of sulfide-containing polyacrylonitrile-methyl acrylate copolymer]

First, 60 g of acrylonitrile, 9.8 g of methyl acrylate and 1.0 g of 1-dodecanethiol were added to 300 ml of acetonitrile contained in a 500-ml three-neck flask, and the resulting mixture was stirred in a nitrogen stream for 30 minutes. Then, a solution prepared by dissolving 0.333 g of azoisobutyronitrile in 50 ml of acetonitrile was added to the three-neck flask. The three-neck flask was immersed in an oil bath at 60°C for 8 hours, and further immersed in an oil bath at 70°C for 1 hour. In the three-neck flask, the resulting solution was concentrated by means of a rotary evaporator, and the concentrated solution was poured in 900 ml of ethanol for re-precipitation. Then, the resulting precipitate was separated through decantation, and dissolved in 100 ml of dimethyl sulfoxide. This operation was repeated twice, and then the resulting precipitate was re-precipitated in 900 ml of methanol. The resulting precipitate was washed with methanol, and filtered out. The resulting solid component was dried through a heat and vacuum drying process over night by means of a vacuum dryer kept at 40°C (with a yield amount of 14.6 g and a yield percentage of 20.6 %).

The solid component (polymer) thus prepared was dissolved in trimethylsilane-containing deuterated dimethyl sulfoxide, and analyzed through $^1$H-NMR analysis. As a result, it was confirmed that the resulting solid component contained acrylonitrile, methyl acrylate and a sulfide group attributable to 1-dodecanethiol (thiol chain transfer agent) with δ = 0.846, 1.234, 1.7 to 2.1, 2.9 to 3.25 and 3.684. Thus, the polymer was identified as a sulfide-containing polyacrylonitrile-methyl acrylate copolymer.

[Exemplary Production Process 2: Production of electrically conductive polyaniline powder containing tetrafluoroboric acid as dopant]

First, 84.0 g (0.402 mol) of a tetrafluoroboric acid aqueous solution (special grade reagent available from Wako Pure Chemical Industries, Ltd.) having a concentration of 42 wt% was added to 138 g of ion-exchanged water contained in a 300-mL volume glass beaker. Then, 10.0 g (0.107 mol) of aniline was added to the resulting solution, while the solution was stirred by a magnetic stirrer. Immediately after the addition of aniline to the tetrafluoroboric acid aqueous solution, aniline was dispersed in an oily droplet form in the tetrafluoroboric acid aqueous solution, and then dissolved in water in several minutes to provide a homogeneous transparent aniline aqueous solution. The aniline aqueous solution thus prepared was cooled to -4°C or lower with the use of a refrigerant bath.

Then, 11.63 g (0.134 mol) of a powdery manganese dioxide oxidizing agent (Grade-1 reagent available from Wako Pure Chemical Industries, Ltd.) was added little by little to the aniline aqueous solution, while the mixture in the beaker was kept at a temperature of not higher than -1°C. Immediately after the oxidizing agent was thus added to the aniline aqueous solution, the color of the aniline aqueous solution turned dark green. Thereafter, the solution was continuously stirred, whereby generation of a dark green solid began.

After the oxidizing agent was added in 80 minutes in this manner, the resulting reaction mixture containing the reaction product thus generated was cooled, and further stirred for 100 minutes. Thereafter, the resulting solid was suction-filtered through No. 2 filter paper (available from ADVANTEC Corporation) with the use of a Buchner funnel and a suction bottle, thereby providing powder. The powder was washed in an about 2 mol/$dm^3$ tetrafluoroboric acid aqueous solution with stirring by means of the magnetic stirrer, then washed in acetone several times with stirring, and suction-filtered. The resulting powder was dried in vacuum at a room temperature for 10 hours. Thus, 12.5 g of an electrically conductive polyaniline (oxidized polyaniline) containing a tetrafluoroborate anion as a dopant was provided, which was bright green powder.

After 130 mg of the electrically conductive polyaniline powder was milled in an agate mortar, the resulting powder was compacted into an electrically conductive polyaniline disk having a thickness of 720 $\mu$m at a pressure of 300 MPa in vacuum for 10 minutes by means of a KBr tablet forming device for infrared spectrum measurement. The disk had an electrical conductivity of 19.5 S/cm as measured by Van der Pauw's four-point electrical conductivity measurement method.

The electrically conductive polyaniline powder prepared in the doped state in the aforementioned manner was put in a 2 mol/$dm^3$ sodium hydroxide aqueous solution, and the resulting mixture was stirred for 30 minutes, whereby the electrically conductive polyaniline was neutralized. Thus, the polyaniline was dedoped with the tetrafluoroboric acid dopant removed therefrom.

The dedoped polyaniline was washed with water until the filtrate became neutral. Then, the dedoped polyaniline was washed in acetone with stirring, and suction-filtered through No. 2 filter paper with the use of a Buchner funnel and a suction bottle. Thus, dedoped polyaniline powder was provided on the No.2 filter paper. The resulting powder was dried in vacuum at a room temperature for 10 hours, whereby brown dedoped polyaniline powder was provided.

Next, the dedoped polyaniline powder was put in a methanol aqueous solution of phenylhydrazine, and reduced for 30 minutes with stirring. The color of the polyaniline powder turned from brown to gray.

After the reduction, the resulting polyaniline powder was washed with methanol and then with acetone, filtered, and dried in vacuum at a room temperature. Thus, reduced dedoped polyaniline (reduced polyaniline) was provided. The resulting powder had a median diameter of 13 $\mu$m as measured by a light scattering method with the use of acetone as a solvent.

After 130 mg of the reduced dedoped polyaniline powder was milled in an agate mortar, the resulting powder was compacted into a reduced dedoped polyaniline disk having a thickness of 720 $\mu$m at a pressure of 75 MPa in vacuum for 10 minutes by means of a KBr tablet forming device for infrared spectrum measurement. The disk had an electrical conductivity of 5.8 $\times$ 10$^{-3}$ S/cm as measured by Van der Pauw's four-point electrical conductivity measurement method.

That is, the polyaniline had a higher electrical conductivity in an ion-inserted oxidized state than in an ion-extracted reduced state. Therefore, the polyaniline was an electrode active material having an electrical conductivity variable due to the ion insertion/extraction.

[Example 1]

(Preparation of Electrode Sheet)

An electrolyte solution was prepared which contained 4.6 g of lithium tetrafluoroborate, 20.9 g of propylene carbonate and 15.7 g of ethylene carbonate. Then, 1 g of the sulfide-containing polyacrylonitrile-methyl acrylate copolymer prepared in Exemplary Production Process 1 was dissolved in 6.88 g of the electrolyte solution at 140°C. After 0.17 g of the polyaniline prepared in Exemplary Production Process 2, 0.67 g of 2,5-dimercapto-1,3,4-thiadiazole (DMcT) and 0.084 g of electrically conductive carbon black (DENKA BLACK available from Denki Kagaku Kogyo K.K.) were added to the resulting solution and 10 g of acetonitrile was further added to the solution, the resulting mixture was kneaded in an agate mortar. The resulting slurry was applied onto carbon paper (TGP-H-030 available from Toray Industries Inc.), and dried at 60 °C in vacuum for 3 hours. Thus, an electrode sheet was produced which included a current collector of the carbon paper and a composite material layer formed from the slurry on the carbon paper. The weight of the active material in the electrode sheet was 3.32 mg/$cm^2$. The weight was determined by multiplying the weight of the composite material layer (obtained by subtracting the weight of the carbon paper from the weight of the electrode sheet) by the weight fraction of the polyaniline and the DMcT with respect to the total weight of the solid components of the lithium tetrafluoroborate, the polyaniline, the DMcT, the electrically conductive carbon black and the sulfide-containing polyacrylonitrile-methyl acrylate copolymer.

The thickness of the electrode was measured by means of a dial gage (available from Ozaki Mfg. Co., Ltd.) which was a flat plate including a distal portion having a diameter of 5 mm. The measurement was performed at ten points on a surface of the sheet, and the measurement values were averaged. Then, the thickness of the composite material layer was determined by subtracting the thickness of the carbon paper from the average thickness. As a result, the thickness of the composite material layer was 42 $\mu$m. The porosity of the composite material layer was 40 % as determined from the above expression (1). The pores of the composite material layer had an average pore diameter of 3.5 $\mu$m as measured by means of a Micromeritics porosimeter AUTOPORE 9520 available from Shimadzu Corporation.

(Production of Power Storage Device)

A power storage device (cell) employing the above electrode sheet as its positive electrode was assembled in the following manner. First, the electrode sheet was prepared as the positive electrode. Further, coin-shaped metal lithium (available from Honjo Metal Co., Ltd.) was prepared as a negative electrode, and a nonwoven fabric (TF40-50) available from Hohsen Corporation was prepared as a separator. An acrylonitrile-methyl acrylate copolymer was prepared in substantially the same manner as in Exemplary Production Process 1, except that 1-dodecanethiol was not blended. Then, an electrolyte solution was prepared by dissolving 1 g of the copolymer in a solution containing 0.77 g of lithium tetrafluoroborate, 3.49 g of propylene carbonate and 3.62 g of ethylene carbonate.

Thereafter, a battery assembling process was performed in an ultrapure argon gas atmosphere in a glove box (having a dew point of -100°C). First, the positive electrode and the negative electrode were placed in properly opposed relation in a stainless steel HS cell (available from Hohsen Corporation) adapted for an experiment of a nonaqueous electrolyte secondary battery, and the separator was properly positioned so as to prevent short circuit between the positive electrode and the negative electrode. Then, the electrolyte solution was injected into the cell. Thereafter, a solution injection port was heat-sealed, whereby the HS cell was sealed. Thus, the cell was completed.

Provided that the active material in the cell had a weight capacity density of 147 mAh/g, the total capacity (mAh) was calculated based on the weight of the active material contained in a unit electrode area. A rate at which the total capacity thus calculated was charged in 1 hour was defined as 1C charge/discharge rate. The weight capacity density and the weight energy density of the cell were 330 mAh/g and 975 mWh/g, respectively, as measured when the charge/discharge process was performed at 0.05C charge/discharge rate once.

The weight capacity density and the energy density of the cell were measured in the following manner.

« Weight Capacity Density of Cell»

The cell was allowed to stand still in a constant-temperature chamber at 25°C, and measurement was performed in a constant current and constant voltage charge/constant current discharge mode by means of a battery charge/discharge device (SD8 available from Hokuto Denko Corporation). The charge termination voltage was set to 3.8 V. After the voltage reached 3.8 V through a constant current charge process, a constant voltage charge process was further performed at 3.8 V until the current value reached 20 % of the current value observed in the constant current charge process. A capacity observed at this time was defined as a charge capacity. Thereafter, a constant current discharge process was performed to a discharge termination voltage of 2.0 V. A weight capacity density was measured in the fifth cycle. The weight capacity density was based on a net weight of the positive electrode active material.

«Weight Energy Density of Cell»

The energy density of the cell was measured in a constant current and constant voltage charge/constant current discharge mode at 25°C by means of a battery charge/discharge device (SD8 available from Hokuto Denko Corporation). The charge termination voltage was set to 3.8 V. After the voltage reached 3.8 V through a constant current charge process, a constant voltage charge process was further performed at 3.8 V for 2 minutes. Thereafter, a constant current discharge process was performed to a discharge termination voltage of 2.0 V, and the weight energy density was measured. Provided that the active material had a weight capacity density of 150 mAh/g, the full capacity density (mAh/g) was calculated based on the weight of the active material contained in a unit electrode area of the cell. The weight energy density was determined so that the cell was charged to the full capacity and discharged in 20 hours (0.05 C).

[Example 2]

An electrode sheet (positive electrode) was produced in substantially the same manner as in Example 1, except that N-methyl-2-pyrrolidone was used instead of acetonitrile. The weight of the active material in the electrode sheet was 1.51 mg/cm$^2$ as measured in the same manner as in Example 1.

The composite material layer of the electrode sheet had a thickness of 35 $\mu$m, a porosity of 32 % and an average pore diameter of 2.5 $\mu$m as measured in the same manner as in Example 1.

A cell (power storage device) was produced in substantially the same manner as in Example 1, except that the electrode sheet produced in the aforementioned manner was used as the positive electrode. The cell had a capacity density of 320 mAh/g and an energy density of 850 mWh/g as measured in the same manner as in Example 1.

[Example 3]

An electrode sheet (positive electrode) was produced in substantially the same manner as in Example 1, except that the polyaniline (produced in Exemplary Production Process 2) was not blended and the proportion of the electrically conductive carbon black (DENKA BLACK available from Denki Kagaku Kogyo K.K.) was 0.067 g. The weight of the active material in the electrode sheet was 1.23 mg/cm$^2$ as measured in the same manner as in Example 1.

The composite material layer of the electrode sheet had a thickness of 41 $\mu$m, a porosity of 37 % and an average pore diameter of 2.3 $\mu$m as measured in the same manner as in Example 1.

A cell (power storage device) was produced in substantially the same manner as in Example 1, except that the electrode sheet produced in the aforementioned manner was used as the positive electrode. The cell had a capacity density of 310 mAh/g and an energy density of 780 mWh/g as measured in the same manner as in Example 1.

[Comparative Example 1]

An electrode sheet (positive electrode) was produced in substantially the same manner as in Example 1, except that a polyacrylonitrile-methyl acrylate copolymer synthesized without the addition of 1-dodecanethiol in Exemplary Production Process 1 was used instead of the sulfide-containing polyacrylonitrile-methyl acrylate copolymer. The weight of the active material in the electrode sheet was 2.72 mg/cm$^2$ as measured in the same manner as in Example 1.

The composite material layer of the electrode sheet had a thickness of 40 $\mu$m, a porosity of 42 % and an average pore diameter of 3.0 $\mu$m as measured in the same manner as in Example 1.

A cell (power storage device) was produced in substantially the same manner as in Example 1, except that the electrode sheet produced in the aforementioned manner was used as the positive electrode. The cell had a capacity density of 220 mAh/g and an energy density of 660 mWh/g as measured in the same manner as in Example 1.

While specific forms of the embodiments of the present invention have been shown in the aforementioned inventive examples, the inventive examples are merely illustrative of the invention but not limitative of the invention. It is contemplated that various modifications apparent to those skilled in the art could be made within the scope of the invention.

The power storage device employing the inventive power storage device electrode can be advantageously used as a lithium secondary battery and other power storage device, and a higher-capacity capacitor. The inventive power storage device can be used for the same applications as the prior art secondary batteries and electrical double-layer capacitors, for example, for mobile electronic apparatuses such as mobile PCs, mobile phones and personal digital assistants (PDAs), and for drive power sources for hybrid electric cars, electric cars and fuel battery cars.

REFERENCE SIGNS LIST

6    CURRENT COLLECTOR
7    COMPOSITE MATERIAL LAYER

**Claims**

1.  A power storage device electrode comprising:

    a layer made of a composite material; and
    a current collector stacked on the layer;
    the composite material comprising:

        (A) an organic sulfide compound as an electrode active material; and

(B) a sulfide-containing organic polymer as a binder.

2. The power storage device electrode according to claim 1, wherein the organic sulfide compound (A) is at least one selected from the group consisting of 2,5-dimercapto-1,3,4-thiadiazole, lithium sulfide, sulfur and 2,4,6-trimercapto-S-triazine.

3. The power storage device electrode according to claim 1 or 2, wherein the organic sulfide compound (A) has a molecular weight of not greater than 1000.

4. The power storage device electrode according to any one of claims 1 to 3, wherein the organic sulfide compound (A) contains not less than two thiol groups or thiolate groups.

5. The power storage device electrode according to any one of claims 1 to 4, wherein the organic polymer (B) is at least one of a polymer obtained through polymerization in the presence of a thiol chain transfer agent, and a polymer obtained through polymerization in the presence of a thiocarbonylthio chain transfer agent.

6. The power storage device electrode according to any one of claims 1 to 5, wherein the organic polymer (B) is at least one of a sulfide-containing polyacrylonitrile-methyl (meth)acrylate copolymer, and a sulfide-containing polyacrylonitrile-(meth)acrylic acid oligoalkylene oxide copolymer.

7. A power storage device comprising:

   an electrolyte layer; and
   a positive electrode and a negative electrode provided on opposite sides of the electrolyte layer;
   wherein the positive electrode is the power storage device electrode according to any one of claims 1 to 6;
   wherein the negative electrode comprises at least one selected from a compound and a metal which are capable of ion insertion/extraction.

FIG. 1

FIG. 2

## INTERNATIONAL SEARCH REPORT

International application No.

PCT/JP2014/058024

| A. CLASSIFICATION OF SUBJECT MATTER |
|---|
| *H01M4/60*(2006.01)i, *H01G11/22*(2013.01)i, *H01M4/137*(2010.01)i, *H01M4/62* (2006.01)i |

According to International Patent Classification (IPC) or to both national classification and IPC

| B. FIELDS SEARCHED |
|---|

Minimum documentation searched (classification system followed by classification symbols)
H01M4/60, H01G11/22, H01M4/137, H01M4/62

Documentation searched other than minimum documentation to the extent that such documents are included in the fields searched

| Jitsuyo Shinan Koho | 1922–1996 | Jitsuyo Shinan Toroku Koho | 1996–2014 |
|---|---|---|---|
| Kokai Jitsuyo Shinan Koho | 1971–2014 | Toroku Jitsuyo Shinan Koho | 1994–2014 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 06-163049 A (Matsushita Electric Industrial Co., Ltd.), 10 June 1994 (10.06.1994), entire text (Family: none) | 1-7 |
| A | JP 05-074459 A (Matsushita Electric Industrial Co., Ltd.), 26 March 1993 (26.03.1993), entire text & US 5324599 A & EP 497308 A2 & DE 69206638 C & CA 2060127 C | 1-7 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 12 June, 2014 (12.06.14) | 24 June, 2014 (24.06.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/058024

C (Continuation).    DOCUMENTS CONSIDERED TO BE RELEVANT

| Category* | Citation of document, with indication, where appropriate, of the relevant passages | Relevant to claim No. |
|---|---|---|
| A | JP 06-283175 A (Matsushita Electric Industrial Co., Ltd.),<br>07 October 1994 (07.10.1994),<br>entire text<br>(Family: none) | 1-7 |
| A | WO 2009/145225 A1 (DIC Corp.),<br>03 December 2009 (03.12.2009),<br>paragraphs [0022] to [0037], [0045] to [0046]<br>& JP 4657383 B | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI91997259864 A

- JP HEI6199420692 A

**Non-patent literature cited in the description**

- *GS Yuasa Technical Report,* December 2010, vol. 7 (2), 12-18

- *Nikkei Electronics,* 13 December 2010, 73-82